# EUROPEAN PATENT SPECIFICATION

(11) **EP 3 807 229 B1**
(45) Date of publication and mention of the grant of the patent: **22.10.2025**
(21) Application number: 19728451.6
(22) Date of filing: 07.06.2019
(51) Int. Cl.: C04B 26/06, C04B 26/14, C04B 26/18, C08K 5/14, C08K 3/01, C07C 409/00, C08F 4/38, C04B 111/54

(54) **PROCESS FOR THE PRODUCTION OF COMPOSITE ARTICLES**
VERFAHREN ZUR HERSTELLUNG EINES VERBUNDARTIKELS
PROCÉDÉ DE PRODUCTION D'ARTICLES COMPOSITES

(30) Priority: 12.06.2018 EP 18177339
(43) Date of publication of application: 21.04.2021
(73) Proprietor: Nouryon Chemicals International B.V., 6824 BM Arnhem (NL)
(72) Inventor: REIJNDERS, Johannes Martinus Gerardus Maria, 8162 ED Epe (NL); TEN BROEKE, Raymond Albertus Johannes, 8103 RC Raalte (NL)
(74) Representative: Ingrassia, Fisher & Lorenz UK Ltd.
(86) International application number: PCT/EP2019/064932
(87) International publication number: WO 2019/238555

(56) References cited:
- EP-A1- 3 260 479
- WO-A1-2010/029468
- WO-A1-2011/083309
- WO-A1-2014/118101
- WO-A1-2015/056585
- DE-A1- 102011 003 382
- DE-B- 1 197 619
- US-A- 4 000 357
- US-A- 4 083 890
- US-B2- 9 382 413

## Description

The present invention relates to a process for the production of filled composite articles.

Examples of such articles are agglomerated stone articles. Agglomerated stone, also called engineered stone, is a composite material in which crushed stone or rock is bound together with an unsaturated polyester resin. The most commonly used types of stone for this application are quartz and marble.

Other examples are highly filled fiber-reinforced systems, such as glass-fibre reinforced rods, angled profiles, and bridge pillars, which can be made by resin transfer moulding or pultrusion.

These highly filled composite materials differ from other types of composite materials, such as glass-fiber reinforced polyester, in their high filler content and, consequently, their low polyester resin content. Agglomerated stone generally contains 75-95 wt% of stone or rock particles; highly filled fiber-reinforced systems generally contain 50-75 wt% of fibers.

Agglomerated stone articles are generally prepared by mixing the required ingredients - including filler (e.g. quartz, crushed stone, marble, or sand), resin, and initiator - and casting the mixture in a mould or on a temporary support, followed by curing it in an oven.

Highly filled fiber-reinforced composites are generally made by pultrusion, in which a mixture of the desired ingredients is pulled through a heated die of the desired form.

Other types of unsaturated polyester-containing composite materials, such as glass-fiber reinforced composites, are conventionally cured at room temperature using a ketone peroxide (generally methyl ethyl ketone peroxide) and a metal accelerator, such as a cobalt salt. The curing reaction is initiated at room temperature by the joint action of peroxide and accelerator and can proceed by the heat that is produced during the exothermic curing reaction. These composite materials typically contain an amount of 60-70 wt% resin and 30-40 wt% glass reinforcement.

Agglomerated stone, on the other hand, contains significantly less resin, i.e. only about 5-25 wt%. This means that the amount of heat that is produced in the composite mixture during the reaction is insufficient for propagating a reaction that is initiated at room temperature. Agglomerated stone production thus requires external heating. The same holds for highly filled fiber-based systems.

US 9382413 B2 describes a process for producing a cured resin compound (to prepare composite articles such as kitchen sinks or panels). The resin is a blend of epoxy and unsaturated polyester or vinyl ester resin. A mixture of peroxides may be present in the composition, for example hydroperoxides or ketone peroxides may be combined with peroxyesters. The curing takes place at a temperature of -15°C up to 250°C.

The production of these highly filled systems furthermore requires a rather long potlife. Potlife is the time between mixing the resin with the cure system and the start of the curing reaction. Accelerated ketone peroxide-based systems do not provide a sufficiently long potlife.

These requirements therefore demand a peroxide that is activated at higher temperature than ketone peroxides. Peroxyesters are very suitable for this purpose.

Unfortunately, however, peroxyesters tend to cause a very high peak exotherm during the curing process. As a result, inner parts of the composite are exposed to very high temperatures during the curing reaction, which causes stress in the resulting article. This stress often results in deformation of the article and/or cracks.

It is therefore an object of the present invention to provide a process for the production of composite articles using a peroxyester, which process results in a relatively low peak exotherm and sufficient potlife.

It is a further desire that the curing time is acceptably short.

This object has been met by using a combination of a peroxyester and an organic hydroperoxide.

The present invention therefore relates to a process for the production of a composite article, comprising the steps of:
(a) providing a curable mixture comprising:
   - 30-95 wt% of filler material,
   - 5-70 wt% of resin, selected from unsaturated polyester resins, vinyl ester resins, (meth)acrylate resins, and combinations thereof,
   - 0.5-10 phr (=weight parts per hundred weight parts of resin) of at least one peroxyester,
   - 0.1- 2.0 phr (=weight parts per hundred weight parts of resin) of at least one organic hydroperoxide,
   the weight ratio peroxyester/organic hydroperoxide being below 14.0, and said mixture being essentially free of ketone peroxide,
(b) shaping the mixture, and
(c) heating the shaped mixture at a temperature in the range 60-100°C to affect hardening of the resin and the formation of an article.

Suitable filler materials include stone particles and fibers.

Stone particles are particles obtained by crushing natural rock or ceramic materials. Examples of suitable materials are quartz, granite, marble, silica sand, porphyry, basalt, marble, dolomite, and colored stones. Quartz and marble are the most preferred materials. The particles preferably have a diameter of 120 mm or less. The desired particle size depends on the application of the resulting article. Suitable particle size fractions are in the range 2.5-120 mm, in the range 0.063-2.5 mm, or below 0.063 mm.

Curable mixtures comprising such particles, preferably contain them in an amount of 75-95 wt%, more preferably 80-95 wt%, even more preferably 85-95 wt%, and most preferably 90-95 wt%. The resin content in such curable mixtures is preferably 5-25 wt%, more preferably 5-20 wt%, even more preferably 5-15 wt%, and most preferably 5-10 wt%.

Examples of fibers are glass fibers, nylon fibers, polyester fibers, aramid fibers (e.g. Twaron^{®}), carbon fibers, cellulose fibers (wood fiber, paper fiber, straw), and natural fibers (e.g. jute, kenaf, industrial hemp, flax (linen), ramie, bamboo, grass, reed, etc.). The most preferred fibers are glass fibers.

Curable mixtures comprising such fibers, preferably contain them in an amount of 50-80 wt%, more preferably 60-80 wt%, and most preferably 65-75 wt%. The resin content in such curable mixtures is preferably 20-50 wt%, more preferably 20-40 wt%, and most preferably 25-35 wt%.

In the context of the present application, the terms "unsaturated polyester resin" and "UP resin" refer to the combination of unsaturated polyester resin and ethylenically unsaturated monomeric compound. The term "vinyl ester resin" refers to a resin produced by the esterification of an epoxy resin with an unsaturated monocarboxylic acid, and dissolved in an ethylenically unsaturated monomeric compound. UP resins and vinyl ester resins as defined above are common practice and commercially available.

Suitable UP resins are so-called ortho-resins, iso-resins, iso-npg resins, and dicyclopentadiene (DCPD) resins.

Acrylate and methacrylate resins without an additional ethylenically unsaturated monomeric compound like styrene are referred to in this application as (meth)acrylate resins.

Examples of ethylenically unsaturated monomeric compounds are: styrene and styrene derivatives like α-methyl styrene, vinyl toluene, indene, divinyl benzene, vinyl pyrrolidone, vinyl siloxane, vinyl caprolactam, stilbene, but also diallyl phthalate, dibenzylidene acetone, allyl benzene, methyl methacrylate, methylacrylate, (meth)acrylic acid, diacrylates, dimethacrylates, acrylamides; vinyl acetate, triallyl cyanurate, triallyl isocyanurate, allyl compounds which are used for optical application (such as (di)ethylene glycol diallyl carbonate), chlorostyrene, tert-butyl styrene, tert-butylacrylate, butanediol dimethacrylate and mixtures thereof. Suitable examples of (meth)acrylates reactive diluents are PEG200 di(meth)acrylate, 1,4-butanediol di(meth)acrylate, 1,3-butanediol di(meth)acrylate, 2,3-butanedioldi(meth)acrylate, 1,6-hexanediol di(meth)acrylate and its isomers, diethyleneglycol di(meth)acrylate,triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, PPG250 di(meth)acrylate, tricyclodecane dimethylol di(meth)acrylate, 1,10-decanediol di(meth)acrylate, tetraethylene glycol di(meth)acrylate, trimethylolpropanetri(meth)acrylate, glycidyl (meth)acrylate, (bis)maleimides, (bis)citraconimides, (bis)itaconimides, and mixtures thereof.

The conventional unsaturated monomer is styrene, which is the preferred monomer from an economical point of view.

The amount of ethylenically unsaturated monomer in UP and vinyl ester resin is preferably at least 0.1 wt%, based on the total weight of the resin, more preferably at least 1 wt%, and most preferably at least 5 wt%. The amount of ethylenically unsaturated monomer is preferably not more than 50 wt%, more preferably not more than 40 wt%, and most preferably not more than 35 wt%.

Examples of suitable peroxyesters to be used in the process of the present invention are tert-butyl peroxybenzoate, tert-butylperoxy-3,5,5-trimethylhexanoate, 1,1-di(tert-butylperoxy)-3,5,5-trimethylhexanoate, tert-butyl-peroxyacetate, tert-butyl-peroxypivalate, tert-butyl-peroxymaleate, 3-hydroxy-1,1-dimethyl-butyl-peroxy neoheptanoate, tert-butyl peroxy-2-ethylhexanoate, 2,5-dimethyl-2,5-di(2-ethylhexanoylperoxy)hexane, and combinations thereof.

More preferred are tert-butyl peroxybenzoate, tert-butylperoxy-3,5,5-trimethylhexanoate, tert-butyl peroxy-2-ethylhexanoate, and 2,5-dimethyl-2,5-di(2-ethylhexanoylperoxy)hexane.

Most preferred are tert-butyl peroxybenzoate and tert-butylperoxy-3,5,5-trimethylhexanoate.

The peroxyester is present in the curable mixture in an amount of 0.5-10 phr, preferably 1.0-5.0 phr, more preferably 1.0-3.0 phr.

Examples of suitable organic hydroperoxides are isopropyl cumyl hydroperoxide, pinane hydroperoxide, para-mentane hydroperoxide, cumyl hydroperoxide, 1,1,3,3-tetramethylbutyl hydroperoxide, tert-butyl hydroperoxide, tert-amyl hydroperoxide, and combinations thereof.

More preferred are isopropyl cumyl hydroperoxide, tert-amyl hydroperoxide, pinane hydroperoxide, and para-mentane hydroperoxide.

Most preferred is isopropyl cumyl hydroperoxide.

The organic hydroperoxide is present in the curable mixture in an amount of 0.1-2 phr (=weight parts per hundred weight parts resin), preferably 0.1-1.5 phr, more preferably 0.2-1.0 phr.

The weight ratio peroxyester/hydroperoxide, calculated based on pure peroxide, in the curable mixture is below 14.0, preferably below 13.0, more preferably below 12.0, even more preferably below 11.0, even more preferably below 10.0, and most preferably below 8.0.

This weight ratio is preferably above 1.0, more preferably above 2.0, even more preferably above 3.0. Most preferably, this weight ratio is in the range 4.0-7.0.

The curable mixture is essentially free of ketone peroxide, which means that the mixture contains less than 0.01 phr ketone peroxide, and most preferably is free of ketone peroxide. Ketone peroxides deteriorate the potlife of the mixture.

In a preferred embodiment, the curable mixture also contains a promoter.

The promoter is preferably a 1,3-diketone or an aromatic nitrogen-containing compound such as bipyridine and biquinoline.

Examples of 1,3-diketones are acetylacetone, benzoylacetone, and dibenzoyl methane, and acetoacetates such as diethyl acetoacetamide, dimethyl acetoacetamide, dipropyl acetoacetamide, dibutyl acetoacetamide, methyl acetoacetate, ethyl acetoacetate, propyl acetoacetate, and butyl acetoacetate. Preferred 1,3-diketones are acetylacetone (i.e. 2,4-pentanedione) and n,n-diethylacetoacetamide. Acetylacetone is the most preferred promoter.

The amount of promoter in the curable mixture is preferably in the range 0.05-1 phr, most preferably 0.1-0.5 phr.

The peroxyester and the organic hydroperoxide can be added to the resin individually, or as a blend. The peroxyester, the hydroperoxide, and the blend may be added as such, or dissolved or admixed with a solvent and/or promoter. A suitable blend is an organic peroxide formulation which comprises:
- 50-80 wt%, preferably 60-80 wt%, and most preferably 60-75 wt% peroxyester,
- 1-20 wt%, preferably 5-20 wt%, and most preferably 5-15 wt% organic hydroperoxide,
- 0-25 wt%, preferably 1-25 wt%, and most preferably 5-20 wt% promoter,
- 0-25 wt%, preferably 1-20 wt%, and most preferably 5-15 wt% organic solvent.

This formulation is essentially free of ketone peroxide, meaning that the formulation contains less than 0.5 wt%, more preferably less than 0.1 wt% ketone peroxide, and most preferably is free of ketone peroxide.

The weight ratio peroxyester/hydroperoxide in this formulation is below 14.0, preferably below 13.0, more preferably below 12.0, even more preferably below 11.0, even more preferably below 10.0, and most preferably below 8.0.

This weight ratio is preferably above 1.0, more preferably above 2.0, even more preferably above 3.0. Most preferably, this weight ratio is in the range 4.0-7.0.

Suitable promoters are listed above. Most of these promoters may function both as promoter and as solvent.

Instead of or in addition to the promoter, the organic peroxide formulation may contain a further organic solvent. Hence, the term "organic solvent" refers to organic solvents other than promoters. Suitable organic solvents are aliphatic hydrocarbon solvents, aromatic hydrocarbon solvents, and solvents that carry an aldehyde, ketone, ether, ester, alcohol, phosphate, or carboxylic acid group.

Examples of suitable organic solvents are aliphatic hydrocarbon solvents such as white spirit and odourless mineral spirit (OMS), aromatic hydrocarbon solvents such naphthenes and mixtures of naphthenes and paraffins, isobutanol, pentanol, methylethyl ketone oxime, 1,2-dioximes, N-methyl pyrrolidinone, N-ethyl pyrrolidinone, dimethyl formamide (DMF), dimethyl sulphoxide (DMSO), 2,2,4-trimethyl pentanediol diisobutyrate (TxIB), esters such as dibutyl maleate, dibutyl succinate, ethyl acetate, butyl acetate, mono- and diesters of ketoglutaric acid, pyruvates, and esters of ascorbic acid (such as ascorbic palmitate), aldehydes, mono- and diesters (more in particular diethyl malonate, dimethyl phthalate, and succinates), 1,2-diketones (in particular diacetyl and glyoxal), benzyl alcohol, and fatty alcohols.

A specifically desired type of organic solvent is a hydroxy-functional solvent, which includes compounds of the formula HO-(-CH₂-C(R¹)₂-(CH₂)ₘ-O-)ₙ-R², wherein each R¹ is independently selected from the group consisting of hydrogen, alkyl groups with 1-10 carbon atoms, and hydroxyalkyl groups with 1 to 10 carbon atoms, n=1-10, m=0 or 1, and R² is hydrogen or an alkyl group with 1-10 carbon atoms. Most preferably, each R¹ is independently selected from H, CH₃, and CH₂OH. Examples of suitable hydroxy-functional solvents are glycols like diethylene monobutyl ether, ethylene glycol, diethylene glycol, dipropylene glycol, and polyethylene glycols, glycerol, and pentaerythritol.

In a preferred embodiment, the organic peroxide formulation comprises:
- 50-80 wt%, preferably 60-80 wt%, and most preferably 60-75 wt% peroxyester,
- 1-20 wt%, preferably 5-20 wt%, and most preferably 5-15 wt% organic hydroperoxide,
- 1-25 wt%, preferably 1-20 wt% of an 1,3-diketone, and
- 1-15 wt%, preferably 5-15 wt% of an organic solvent.

This formulation is essentially free of ketone peroxide, meaning that the formulation contains less than 0.5 wt%, more preferably less than 0.1 wt% ketone peroxide, and most preferably is free of ketone peroxide.

The weight ratio peroxyester/hydroperoxide in this formulation is below 14.0, preferably below 13.0, more preferably below 12.0, even more preferably below 11.0, even more preferably below 10.0, and most preferably below 8.0.

This weight ratio is preferably above 1.0, more preferably above 2.0, even more preferably above 3.0. Most preferably, this weight ratio is in the range 4.0-7.0.

Even more preferred, the organic peroxide formulation comprises:
- 60-75 wt% peroxyester, preferably selected from tert-butyl perbenzoate and tert-butyl-3,5,5-trimethylhexanoate,
- 5-15 wt% organic hydroperoxide, preferably selected from isopopyl cumyl hydroperoxide, tert-amyl hydroperoxide, pinane hydroperoxide, and paramethane hydroperoxide,
- 1-20 wt% of an 1,3-diketone, and
- 1-15 wt% of an organic solvent,
wherein the formulation is free of ketone peroxide, the weight ratio peroxyester/hydroperoxide is in the range 4.0-7.0.

The curable mixture formed in step (a) of the process preferably additionally contains a metal accelerator, preferably a Co salt or complex, such as cobalt octoate or cobalt naphthenate, a copper salt or complex, an iron salt or complex, and/or a manganese salt or complex. More preferably, the curable mixture formed in step (a) of the process contains an iron salt or complexes and/or a manganese salt or complex.

Examples of iron (II) and iron (III) salts and complexes are iron chloride, nitrate, sulphate, lactate, 2-ethyl hexanoate (octoate), octanoate, nonanoate, heptanoate, neodecanoate, naphthenate, acetate, and iron complexes of tridentate, tetradentate, pentadentate, or hexadentate nitrogen donor ligands disclosed in WO 2011/83309, more in particular the bispidon ligands and the TACN-Nx ligands. The preferred bispidon ligand is dimethyl-2,4-di-(2-pyridyl)-3-methyl-7-(pyridin-2-ylmethyl)-3,7-diaza-bicyclo[3.3.1]nonan-9-one-1,5-dicarboxylate (N2py3o-Cl). The preferred TACN-Nx ligand is 1,4,7-trimethyl-1,4,7-triazacyclononane (Me₃-TACN).

Examples of manganese salts and complexes are manganese chloride, nitrate, sulphate, lactate, 2-ethyl hexanoate, octanoate, nonanoate, heptanoate, neodecanoate, naphthenate, and acetate, and the Mn complexes of pyridine, porphirine-based ligands, and of the tridentate, tetradentate, pentadentate, or hexadentate nitrogen donor ligands disclosed in WO 2011/83309, more in particular the bispidon ligands and the TACN-Nx ligands. The preferred bispidon ligand is dimethyl-2,4-di-(2-pyridyl)-3-methyl-7-(pyridin-2-ylmethyl)-3,7-diaza-bicyclo[3.3.1]- nonan- 9-one-1,5-dicarboxylate (N2py3o-Cl). The preferred TACN-Nx ligand is 1,4,7-trimethyl-1,4,7-triazacyclononane (Me₃-TACN). Any one of Mn(II), Mn(III), Mn(IV), and Mn(VII) compounds can be used.

The mixture formed in step (a) of the process of the present invention may further contain additional materials, such as mineral fillers (e.g. micronized silica or feldspar), bifunctional silanes or titanates to improve the bonding between the resin and the fibers or stone particles, and/or coloring agents.

In addition, the mixture may contain one or more metal carboxylate salts of ammonium, alkali metals, and alkaline earth metals are the 2-ethyl hexanoates (i.e. octanoates), nonanoates, heptanoates, neodecanoates, and naphthenates. The preferred alkali metal is K. the most preferred metal carboxylate salt is potassium octanoate. These salts are often already incorporated in the resin.

In step (a) of the process according to the present invention, the ingredients are mixed before being shaped and heated.

Optionally, the resin and/or the filler material are pre-heated to a temperature of about 20-35°C, more preferably about 25-30°C, before they are mixed with the other components.

In a preferred embodiment, the peroxyester, the organic hydroperoxide, and the optional promoter are first mixed with the resin before they are mixed with the filler material.

The mixture is subsequently shaped in a desired form.

Shaping can be performed by placing the mixture in a mould or on a temporary support, after which is preferably compacted. Compacting can be performed by vacuum vibrocompression, i.e. vacuum compression with the simultaneous application of a vibratory motion as described in, for instance, EP 0 786 325. After the heating step, the cured article can be removed from the mould or temporary support. This form of shaping is preferred for mixtures comprising stone particles.

Another form of shaping is pulling the mixture through a heated die, for instance by a pultrusion technique. This is the preferred way of shaping fiber-containing mixtures.

During or after shaping, the curable mixture is heated to allow the curing of the resin to occur. Heating is preferably conducted in an environment with a controlled temperature of 60-100°C, and preferably 80-90°C. The article can then be further cooled to ambient temperature (20-30°C). This step is preferably performed without subjecting the article to any thermal shocks or cold air flows. The resulting article can be used for various applications, such as the production of kitchen worktops, flooring materials, window profiles, facade panels, reinforcement bars, construction materials, rails, and grips.

### EXAMPLES

### Comparative Example 1:

To 100 grams UP resin (Palatal^{®} P4), 0.2 grams of a cobalt(II) octanoate accelerator (Accelerator NL-51P, ex-AkzoNobel) were added. Thereafter, 2 grams of a 90 wt% solution of tert-butylperoxy-3,5,5-trimethylhexanoate in acetylacetone (Trigonox^{®} 42PR, ex-AkzoNobel) were added and mixed. Subsequently, 200 grams of quartz filler were added.

The resulting mixture was poured into a test tube containing a thermocouple. The test tube was heated in a water bath of 80°C. The temperature of the mixture was recorded in time. Geltime (GT; the time required for the mixture temperature to increase from 63.3°C to 85.6°C), time to peak (TTP; the time required to reach the maximum temperature), peak exotherm (PE; maximum temperature reached), and minimum cure time (MCT; the time lapsed starting from 63.3°C till the maximum temperature) were determined. The results are displayed in Table 1.

### Example 2

Comparative Example 1 was repeated, but with the additional presence of 0.5 grams of a 55 wt% solution of isopropylcumyl hydroperoxide in diisopropylbenzene (Trigonox^{®} M-55, ex-AkzoNobel).

### Example 3

Example 2 was repeated, except that the peroxyester solution and the hydroperoxide solution were pre-mixed prior to their addition to the resin mixture.

### Example 4

Example 2 was repeated, except that different amounts of peroxyester and hydroperoxide were used.

### Comparative Example 5

Comparative Example 1 was repeated, using 2 grams of an 80% tertbutylperoxybenzoate solution in acetylacetone (Trigonox^{®} 93, ex-AkzoNobel) instead of 2 grams Trigonox^{®} 42PR.

### Example 6

Comparative Example 5 was repeated, but with the additional presence of 0.5 grams of a 55 wt% solution of isopropylcumyl hydroperoxide in diisopropylbenzene (Trigonox^{®} M-55, ex-AkzoNobel).

### Example 7

Comparative Example 5 was repeated, but with the additional presence of 0.5 grams of a 90 wt% solution of cumyl hydroperoxide in an aromatic solvent mixture (Trigonox^{®} K-90, ex-AkzoNobel).

### Example 8

Comparative Example 5 was repeated, but with the additional presence of 0.5 grams of a 85 wt% solution of tert-amyl hydroperoxide in water (Trigonox^{®} TAHP-W85, ex-AkzoNobel).

### Example 9

Comparative Example 5 was repeated, but with the additional presence of 0.5 grams of a 50-55 wt% solution of pinane hydroperoxide in a mixture of ci-pinane, trans-pinane and cis-pinanol (Glidox^{®} 500, ex-Symrise).

**Table 1**

| Example | weight ratio peroxyester/hydroperoxide | GT (min) | MCT (min) | TTP (min) | PE (°C) |
|---|---|---|---|---|---|
| Comp.1 | 1.8/0 | 1.5 | 3.3 | 5.1 | 123 |
| 2 | 1.8/0.28= 6.4 | 1.6 | 4.4 | 6.1 | 109 |
| 3 | 1.8/0.28 = 6.4 | 1.6 | 4.3 | 6.3 | 113 |
| 4 | 1.35/0.55 = 2.5 | 2.5 | 6.5 | 8.5 | 99 |
| | 0.9/0.82 = 1.1 | 3.7 | 6.3 | 8.1 | 88 |
| | 2.0/0.14 = 14.3 | 1.6 | 3.7 | 5.6 | 121 |
| | 1.8/0.14 = 12.9 | 1.8 | 4.1 | 6.0 | 119 |
| | 1.8/0.55 = 3.3 | 1.7 | 4.9 | 6.7 | 102 |
| | 1.35/0.28 = 4.8 | 2.2 | 5.5 | 7.6 | 111 |
| | 2.25/0.28 = 8.0 | 1.7 | 4.0 | 5.8 | 113 |
| Comp.5 | 1.6/0 | 2.2 | 4.7 | 6.5 | 123 |
| 6 | 1.6/0.28 = 5.7 | 2.1 | 5.4 | 7.0 | 113 |
| 7 | 1.8/ 0.45 = 4.0 | 2.1 | 6.0 | 8.0 | 103 |
| 8 | 1.8/0.42 = 4.3 | 3.0 | 5.5 | 7.5 | 89 |
| 9 | 1.8/0.25 = 7.2 | 1.7 | 5.0 | 7.0 | 100 |

### Example 10

The potlife of was determined of three curable mixtures:
- the mixture of Comparative Example 1,
- the mixture of Example 3, and
- the mixture of Example 3 additionally containing 5 wt% Butanox^{®} M50 (methyl ethyl ketone peroxide solution in dimethyl phthalate; active oxygen content 8.8-9.0 wt%; ex-AkzoNobel).

The potlife was determined by visually checking the point of gelation of the unfilled resin system at 40 °C in an oil bath.

The mixtures of Comparative Example 1 and Example 3 both had a potlife of 75-80 min. The methyl ethyl ketone peroxide-containing mixture had a potlife of only 17 min.

## Claims

1. Process for the production of a composite article, comprising the steps of:
a) providing a curable mixture comprising:
- 30-95 wt% of filler material,
- 5-70 wt% of resin, selected from unsaturated polyester resins, vinyl ester resins, (meth)acrylate resins, and combinations thereof,
- 0.5-10 phr (=weight parts per hundred weight parts resin) of at least one peroxyester,
- 0.1- 2.0 phr of at least one organic hydroperoxide,
the weight ratio peroxyester/organic hydroperoxide being below 14.0, the curable mixture being essentially free of ketone peroxide,
b) shaping the mixture, and
c) heating the shaped mixture at a temperature in the range 60-100°C to affect hardening of the resin and the formation of an article.

2. Process according to claim 1 wherein the filler material comprises stone particles, preferably selected from quartz or marble particles.

3. Process according to claim 2 wherein the mixture comprises 85-95 wt% stone particles, preferably 90-95 wt% stone particles.

4. Process according to claim 1 wherein the filler material comprises reinforcing fibers, preferably reinforcing glass fibers.

5. Process according to claim 4 wherein the mixture comprises 50-80 wt% reinforcing fibres.

6. Process according to any one of the preceding claims wherein the peroxyester is selected from the group consisting of tert-butyl peroxybenzoate, tert-butylperoxy-3,5,5-trimethylhexanoate, 1,1-di(tert-butylperoxy)-3,5,5-trimethylhexanoate, tert-butyl-peroxyacetate, tert-butyl-peroxypivalate, tert-butyl-peroxymaleate, 3-hydroxy-1,1-dimethyl-butyl-peroxy neoheptanoate, tert-butyl peroxy-2-ethylhexanoate, 2,5-dimethyl-2,5-di(2-ethylhexanoylperoxy)hexane, and combinations thereof, preferably selected from tert-butyl peroxybenzoate and tert-butylperoxy-3,5,5-trimethylhexanoate.

7. Process according to any one of the preceding claims wherein the organic hydroperoxide is selected from isopropyl cumyl hydroperoxide, pinane hydroperoxide, para-mentane hydroperoxide, cumyl hydroperoxide, 1,1,3,3-tetramethylbutyl hydroperoxide, tert-butyl hydroperoxide, tert-amyl hydroperoxide, and combinations thereof, preferably selected from isopropyl cumyl hydroperoxide, pinane hydroperoxide, and para-mentane hydroperoxide.

8. Process according to any one of the preceding claims wherein the weight ratio peroxyester/hydroperoxide is below 13.0, more preferably below 12.0, more preferably below 11.0, and even more preferably below 10.0, more preferably below 8.0, and most preferably in the range 4.0-7.0.

9. Process according to any one of the preceding claims wherein the mixture additionally comprises a cure accelerator selected from Co, Cu, Mn, and Fe salts and complexes.

10. Process according to any one of the preceding claims wherein the mixture additionally comprises a 1,3-diketone, preferably selected from acetylacetone and n,n-diethylacetoacetamide.

## Patentansprüche

1. Verfahren zur Herstellung eines Verbundartikels, umfassend die Schritte des:
a) Bereitstellens einer aushärtbaren Mischung umfassend:
- 30-95 Gew.-% Füllstoffmaterial,
- 5-70 Gew.-% Harz, das ausgewählt ist unter ungesättigten Polyesterharzen, Vinylesterharzen, (Meth)acrylatharzen und Kombinationen davon,
- 0,5-10 phr (= Gewichtsteilen pro hundert Gewichtsteilen Harz) von mindestens einem Peroxyester,
- 0,1 - 2,0 phr mindestens eines organischen Hydroperoxids, wobei das Gewichtsverhältnis von Peroxyester/organischem Hydroperoxid weniger als 14,0 beträgt, wobei die aushärtbare Mischung im Wesentlichen frei von Ketonperoxid ist,
b) Gestalten der Mischung und
c) Erhitzen der gestalteten Mischung bei einer Temperatur im Bereich von 60-100 °C, um Härten des Harzes und die Bildung eines Artikels auszuführen.

2. Verfahren nach Anspruch 1, wobei das Füllstoffmaterial Steinpartikel umfasst, die bevorzugt unter Quarz- oder Marmorpartikeln ausgewählt sind.

3. Verfahren nach Anspruch 2, wobei die Mischung 85-95 Gew.-% Steinpartikel, bevorzugt 90-95 Gew.-% Steinpartikel umfasst.

4. Verfahren nach Anspruch 1, wobei das Füllstoffmaterial verstärkende Fasern, bevorzugt verstärkende Glasfasern umfasst.

5. Verfahren nach Anspruch 4, wobei die Mischung 50-80 Gew.-% verstärkende Fasern umfasst.

6. Verfahren nach einem der vorhergehenden Ansprüche, wobei der Peroxyester aus der Gruppe ausgewählt wird bestehend aus tert-Butylperoxybenzoat, tert-Butylperoxy-3,5,5-trimethylhexanoat, 1,1-Di(tert-butylperoxy)-3,5,5-trimethylhexanoat, tert-Butylperoxyacetat, tert-Butylperoxypivalat, tert-Butylperoxymaleat, 3-Dihydroxy-1,1-dimethylbutylperoxyneoheptanoat, tert-Butylperoxy-2-ethylhexanoat, 2,5-Dimethyl-2,5-di(2-ethylhexanoylperoxy)hexan und Kombinationen davon, die bevorzugt unter tert-Butylperoxybenzoat und tert-Butylperoxy-3,5,5-trimethylhexanoat ausgewählt werden.

7. Verfahren nach einem der vorhergehenden Ansprüche, wobei das organische Hydroperoxid ausgewählt wird unter Isopropylcumylhydroperoxid, Pinanhydroperoxid, Para-Mentanhydroperoxid, Cumylhydroperoxid, 1,1,3,3-Tetramethylbutylhydroperoxid, tert-Butylhydroperoxid, tert-Amylhydroperoxid und Kombinationen davon, die bevorzugt ausgewählt werden unter Isopropylcumylhydroperoxid, Pinanhydroperoxid und Para-Mentanhydroperoxid.

8. Verfahren nach einem der vorhergehenden Ansprüche, wobei das Gewichtsverhältnis von Peroxyester/Hydroperoxid unter 13,0, bevorzugt unter 12,0, noch bevorzugter unter 11,0 und selbst noch bevorzugter unter 10,0, noch bevorzugter unter 8,0 und am bevorzugtesten im Bereich von 4,0-7,0 liegt.

9. Verfahren nach einem der vorhergehenden Ansprüche, wobei die Mischung zusätzlich einen Aushärtungsbeschleuniger ausgewählt unter Co-, Cu-, Mn- und Fe-Salzen und -Komplexen umfasst.

10. Verfahren nach einem der vorhergehenden Ansprüche, wobei die Mischung zusätzlich ein 1,3-Diketon umfasst, das bevorzugt unter Acetylaceton und N,N-Diethylacetacetamid ausgewählt wird.

## Revendications

1. Procédé de production d'un article composite, comprenant les étapes consistant à :
a) fournir un mélange durcissable comprenant :
- de 30 à 95 % en poids de matériau de remplissage,
- de 5 à 70 % en poids de résine, choisie parmi les résines polyester insaturées, les résines esters de vinyle, les résines (méth)acrylates, et des combinaisons de celles-ci,
- de 0,5 à 10 phr (parties en poids pour cent parties en poids de résine) d'au moins un peroxyester,
- de 0,1 à 2,0 phr d'au moins un hydroperoxyde organique, le rapport pondéral peroxyester/hydroperoxyde organique étant inférieur à 14,0, le mélange durcissable étant essentiellement exempt de peroxyde de cétone,
b) façonnage du mélange, et
c) chauffage du mélange façonné à une température dans la plage allant de 60 à 100 °C pour affecter le durcissement de la résine et la formation d'un article.

2. Procédé selon la revendication 1 dans lequel le matériau de remplissage comprend des particules de pierre, de préférence choisies parmi des particules de quartz ou de marbre.

3. Procédé selon la revendication 2 dans lequel le mélange comprend de 85 à 95 % en poids de particules de pierre, de préférence de 90 à 95 % en poids de particules de pierre.

4. Procédé selon la revendication 1 dans lequel le matériau de remplissage comprend des fibres de renforcement, de préférence des fibres de verre de renforcement.

5. Procédé selon la revendication 4 dans lequel le mélange comprend de 50 à 80 % en poids de fibres de renforcement.

6. Procédé selon l'une quelconque des revendications précédentes dans lequel le peroxyester est choisi dans le groupe constitué par le peroxybenzoate de tert-butyle, le peroxy-3,5,5-triméthylhexanoate de tert-butyle, l'hexanoate de 1,1-di(tert-butylperoxy)-3,5,5-triméthyle, le peroxyacétate de tert-butyle, le peroxypivalate de tert-butyle, le peroxymaléate de tert-butyle, le peroxynéoheptanoate de 3-hydroxy-1,1-diméthylbutyle, le peroxy-2-éthylhexanoate de tert-butyle, le 2,5-diméthyl-2,5-di(2-éthylhexanoylperoxy)hexane, et des combinaisons de ceux-ci, de préférence choisi parmi le peroxybenzoate de tert-butyle et le peroxy-3,5,5-triméthylhexanoate de tert-butyle.

7. Procédé selon l'une quelconque des revendications précédentes dans lequel l'hydroperoxyde organique est choisi parmi l'hydroperoxyde d'isopropylcumyle, l'hydroperoxyde de pinane, l'hydroperoxyde de para-mentane, l'hydroperoxyde de cumyle, l'hydroperoxyde de 1,1,3,3-tétraméthylbutyle, l'hydroperoxyde de tert-butyle, l'hydroperoxyde de tert-amyle, et des combinaisons de ceux-ci, de préférence choisi parmi l'hydroperoxyde d'isopropylcumyle, l'hydroperoxyde de pinane et l'hydroperoxyde de para-mentane.

8. Procédé selon l'une quelconque des revendications précédentes dans lequel le rapport pondéral peroxyester/hydroperoxyde est inférieur à 13,0, de préférence inférieur à 12,0, plus préférablement inférieur à 11,0, et encore plus préférablement inférieur à 10,0, plus préférablement inférieur à 8,0, et de manière préférée entre toutes dans la plage de 4,0 à 7,0.

9. Procédé selon l'une quelconque des revendications précédentes dans lequel le mélange comprend en outre un accélérateur de durcissement choisi parmi les sels et complexes de Co, Cu, Mn et Fe.

10. Procédé selon l'une quelconque des revendications précédentes dans lequel le mélange comprend en outre une 1,3-dicétone, de préférence choisie parmi l'acétylacétone et le n,n-diéthylacétoacétamide.
